# EUROPEAN PATENT SPECIFICATION

(11) **EP 3 401 446 B1**
(45) Date of publication and mention of the grant of the patent: **22.09.2021**
(21) Application number: 18171813.1
(22) Date of filing: 11.05.2018
(51) Int. Cl.: E02F 7/04, E02F 9/08

(54) **MULTI-PURPOSE WORK MACHINE**
MEHRZWECKARBEITSMASCHINE
MACHINE DE TRAVAIL À USAGES MULTIPLES

(30) Priority: 12.05.2017 FI 20174132 U
(43) Date of publication of application: 14.11.2018
(73) Proprietor: Idea - Keksi Oy, 80400 Ylämylly (FI)
(72) Inventor: Mantsinen, Yrjö Juhani, 80400 Ylämylly (FI)
(74) Representative: Kolster Oy Ab

(56) References cited:
- EP-A1- 2 939 876
- WO-A1-2008/097146
- WO-A1-2015/053689
- DE-U1- 9 314 191
- DE-U1- 29 708 637
- US-A1- 2010 044 124

## Description

### Background of the invention

The invention relates to a multi-purpose work machine. Prior art work machine solutions do not allow an advantageous total solution for work carried out by, for example, a combination of an excavator-loader and a transporter. For the above work, a separate excavator and a separate transfer vehicle or a wheel loader for the material have been used. Document DE 297 08 637 U1 discloses a combination work vehicle with a swivelling driver's cabin. Document WO 2015/053689 A1 discloses an arrangement for a terrain-going motor vehicle.

### Brief description of the invention

In this application, a new total solution according to the invention is put forth for a multi-purpose work machine that on its own carries out, for example, digging work, lifting of cleared material onto a platform and transporting it away from a site. A solution is disclosed, by means of which also other work may be performed, including personnel hoist work, scattering of material onto an underlay, and bulldozer clearing of soil. The multi-purpose work machine is terrain-capable and is able to move on challenging terrain, too. The multi-purpose work machine may be used to carry tools that are needed in levelling operations, excavating work, and snow work. The multi-purpose work machine is fast enough to perform transports. The multi-purpose work machine according to the invention is thanks to its extensive equipping potential suitable for enhancing the completion of the diverse tasks that municipalities, parishes, construction companies, contracting companies, machine rental companies, agriculture and forestry, the construction, repair, and clearing of power lines, armed forces, recycling material processing, industry and service providers of various kinds are faced with. The multi-purpose work machine digs, loads, lifts and transports, and as a result of its diverse equipping potential is able to carry out different tasks at a job site in an efficient manner. It is suited to transporting work materials both at a site and for short-distance transports. The platform is provided with a tipping device, making the multi-purpose work machine suitable for unloading sand, granular material and materials in general by tipping from the platform. The device may on its own carry out excavator work, loading work, personnel hoist work as well as moving to and from a site. A multi-purpose boom may be equipped modularly and transformably by a personnel hoist, bucket, or grab so that different tasks may be performed with one and the same machine. The multi-purpose work machine may be equipped with different kinds of interchangeable platform systems.

The invention is additionally well suited to landscaping, taking care of grounds of properties, and to construction sites.

The working efficiency of a machinery contractor is enhanced when performing many different tasks can be accomplished with one machine without the need for dedicated machines. The multi-purpose work machine according to our invention is usable throughout the year. The multi-purpose work machine is available in many size categories from 2 to 90 tons. The axles solutions are selected on the basis of the required carrying capacity and the surface pressure requirements of the environment. The axles are both at the front and back of the frame. The wheels of the front axles or rear axles turn, or optionally both turn.

An embodiment of the invention comprises a solution in which the machine is optionally controlled by remote control. The machine comprises a camera/cameras for remote control, by means of which an image is obtained from the machine just like from its cabin. There are remote control devices for the remote control of the motor and tools, such as a boom, bucket and similar tools. There is one or more cameras, and advantageously three-dimensional images are produced with a 3D camera / 3D cameras. In such a case, the control device may be remotely located and separate from the machine itself.

The multi-purpose work machine according to the invention is a modular structure, which has a frame part and on it axles both at the front and back of the frame. Advantageously the wheels of the axles turn both at the front and back of the frame. The modular structure ensures that as the frame is a standard structure it is provided with provisions for platforms and tools of various kinds.

The following platforms are used in the invention:
- an interchangeable platform
- a cargo space which may be tipped/lowered/lifted and left on the ground and picked up from the ground; whereby the interchangeable platform is used with a hook interchangeable platform device or a cable interchangeable platform device.

The multi-purpose work machine according to the invention comprises, at one end of the frame, a work part which rotates freely and advantageously at least 360 degrees unrestrictedly around its vertical axis Y, the part comprising a boom and a cabin from which the machine is controlled and steered. The boom turns freely with the cabin and advantageously at least 360 degrees around the vertical axis Y. The structural solution of the work part is excavator-like.

According to the invention, the boom may be equipped with a bucket or man cage or a separate gripping part, or grab, or crusher jaws or chipping device, that is, different kinds of tools. The boom is hence a multi-purpose boom enabling different kinds of work performances. The different tools may be mounted on it detachably at the end of the boom advantageously with quick clamping. A reference may also be made to a boom structure, comprising at least one boom, which boom structure or boom is moved with actuators such as hydraulic cylinders.

The platform and interchangeable platform in an embodiment comprises a chain conveyor at the bottom of the platform, used to unload stabilizing agent, for example, at an earth-moving site.

The multi-purpose work machine is frame or wheel-steered. When the boom part is operating, the multi-purpose work machine may be supported with a bulldozer blade and cylinder to the ground and/or with side support legs to the ground. When the frame steer module disclosed in the invention is used, the joint between the frame may be locked for the duration of loading.

An embodiment of the invention comprises as auxiliary equipment a solution in which the machine is controlled by remote control. In such a case, the machine comprises a camera/cameras for remote control, by means of which an image is obtained from the machine just like from its cabin. There are remote control devices for the remote control of the motor and tools, such as a boom, bucket and similar tools. There is one or more cameras, and advantageously three-dimensional images are produced.

The frame in a preferred embodiment of the invention comprises one or more module parts, advantageously a plurality of module parts, and advantageously three frame portions, that is, frame modules.

In such a case, by changing the module parts, different combinations can be achieved for various needs. The modules are provided with provisions of different kinds for different connection alternatives. So, it is enough to simply know the auxiliary device to be attached, such as a platform, and its installation is ready to be immediately performed. There is no need for machining, welding or any similar arrangements. Cost savings result from storage costs, for example.

The steering of the multi-purpose work machine may, as mentioned, be frame steering performed by cylinders. If the wheels of the axles are steering and turning, frame steering will not be used.

The multi-purpose work machine comprises a detachable bulldozer blade and support legs on the sides. The bulldozer blade may be pressed to the ground by cylinders whereby the machine may be supported to the ground during operation of the boom not only by the bulldozer blade but also by the support legs.

In an embodiment, the multi-purpose work machine is optionally provided by an additional power source which is placed on top of the frame immediately behind the platform and work part. The additional power source may be a diesel motor or, generally speaking, an internal combustion engine, and it may comprise a pump device to create hydraulic pressure for the hub motors on the rear axles. The arrangement may also be entirely electric and battery-based, or a combination of an internal combustion engine and an electric motor, or a combination of a hydraulic system and electric system. The additional power source bring the additional energy needed to the work device outfit.

The multi-purpose work machine according to the invention is characterized by what is disclosed in the claims.

### Brief description of the figures

The invention will in the following be described by reference to the embodiments in the attached drawings. It is not, however, the intention to restrict the invention solely to them.
Figure 1 shows a multi-purpose work machine equipped with a tipping load unit.
Figure 2 shows a work position of the machine.
Figure 3 illustrates an embodiment with an interchangeable platform. Shown are the interchangeable platform and hook device.
Figure 4 shows an interchangeable platform and a cable device.
Figure 5a shows a fixed platform.
Figure 5b shows a tipping platform.
Figure 6 illustrates a module structure.
Figure 7 shows a hook device and a frame structure of a log trailer.
Figure 8 shows a cable device solution in the handling of an interchangeable platform and in connection with a module A1.
Figure 9 shows a centre module A2 comprising frame-steering cylinders n1 and n2, as well as a slewing bearing ring H of the cabin, and a drive bogie G.
Figure 10 shows the 1-module solution of the invention as an undercarriage, comprising a slewing bearing ring and axles.
Figure 11 shows a module A3, that is, the axle module.
Figure 12 shows a bulldozer blade module A4 by means of which the machine may be supported against the ground during loading, and which blade may be used as a leveller and plough.
Figure 13 shows a bucket embodiment of the multi-purpose boom.
Figure 14 shows a grab embodiment of the multi-purpose boom.
Figures 15 and 16 show a 4-axle solution with an optional additional power source.
Figure 17 shows an area X1 which in Figure 18 is in a larger scale.
Figure 19 shows a module A1 on a fixed platform to which a module A2 comprising the bearing of the cabin is connected, and to which an axle module A3 is further connected.
   The modules are connected to each other by screw and flange joints. An embodiment is also possible where instead of the flange joints are connected to each other by welding. The machine is of metal.
Figures 20 to 24 show axonometrically the so-called frame-steering module from various viewpoints and in different rotational positions of the cylinders.
Figure 25 is a cross section B-B of Figure 21.

### Detailed description of the invention

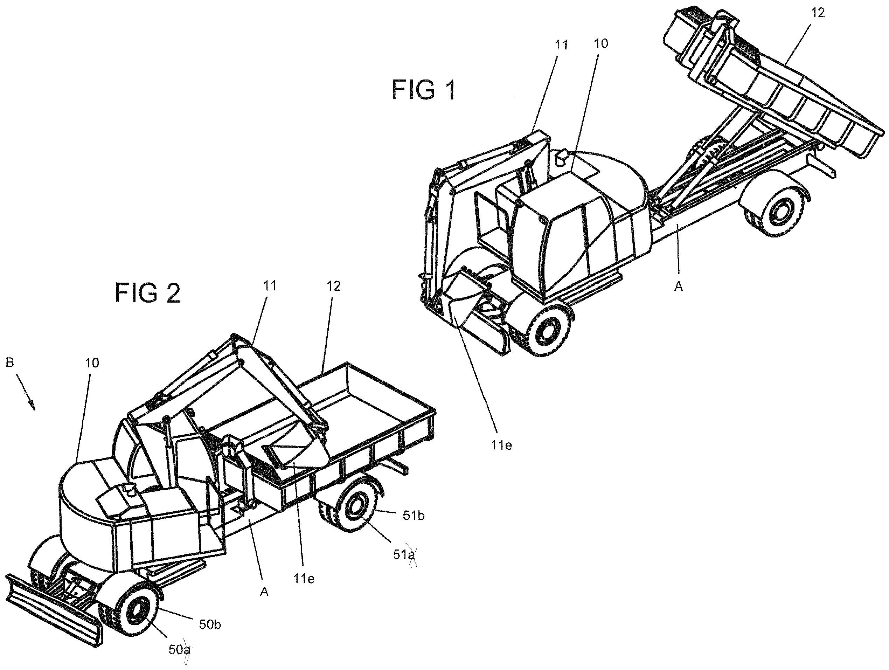

Figure 1 shows axonometrically a multi-purpose work machine equipped with a tipping platform. The machine comprises an upper carriage B, or the upper frame, and the undercarriage A, so the lower frame. The upper carriage consists of a cabin 10, or the device cabin, and a multi-purpose boom 11 which may be rotated together 360 degrees around the vertical axis Y. The undercarriage A comprises 2 to 6 axles 50a, 51a.... and on them wheels 50b, 51b..... The total weight of the multi-purpose work machine is 1 to 90 tons and the maximum speed is the speed allowed for a traffic tractor. The essential issue in the device according to the invention is that the frame A comprises a changeable load unit 12, such as an interchangeable platform. The drive may be on the front axle 50a or the rear axle 51a, or both. The machine steering in the embodiment is such that the front wheels 50b turn. An embodiment is also possible where the front wheels 50b and rear wheels 51b turn.

In an optional embodiment of the invention, the cabin 10 serves as a base for the remote controller equipment, such as a camera or cameras. The camera is advantageously a 3D camera producing three-dimensional images. By means of the remote control means, the machine may steered and the tools, such as the boom, be controlled and used in a remote-controlled fashion. In the most common embodiment of the invention, the cabin 10 is a compartment comprising room for the operator and the steering means of the machine.

Figure 2 shows the cabin 10 of the machine of Figure 1 and thus the entire work part turned so that the bucket 11e of the boom 11 may drop soil or similar on the platform 12 or generally speaking to a load unit 12. The actual work part B, that is, the upper carriage and so the cabin 10 with its boom 11 turns at least 360 degrees.

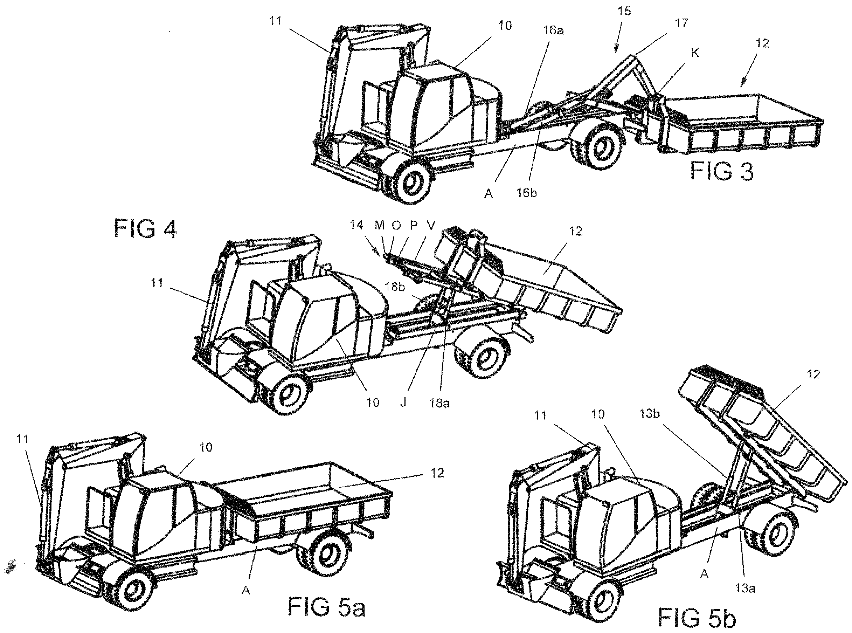

Figure 3 shows an embodiment of the multi-purpose work machine, in which the multi-purpose work machine comprises, as the load unit 12, an interchangeable platform which may be lifted on top of the frame A and lowered and left on the ground by a cable device 15. Hydraulic cylinders 16a and 16b turn the frame 17 of the hook device. The hook K of the device couples to a gripping bar on the platform and pulls the platform onto the frame A.

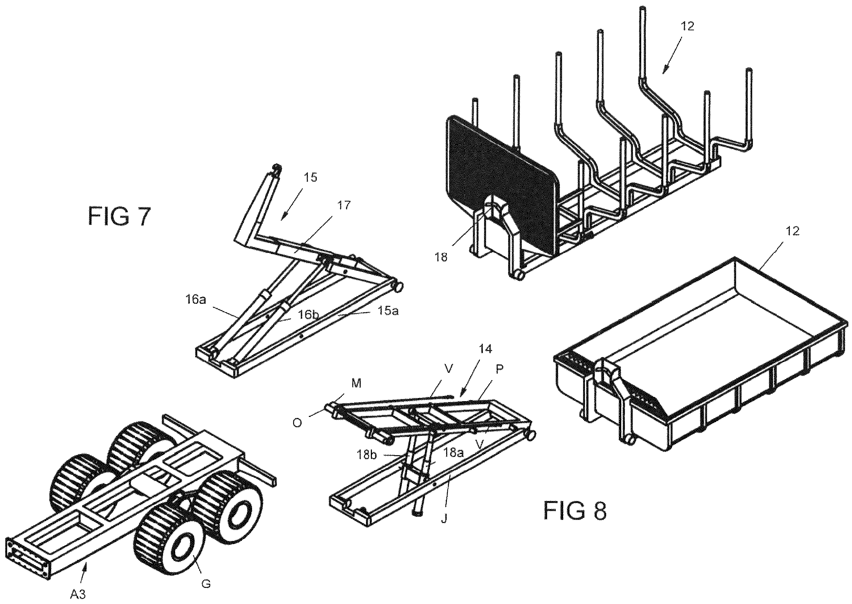

Figure 4 shows an embodiment in which an interchangeable platform acting as the load unit 12 is moved to tiltable rails P by a cable device 14 or a chain device. The rails P are pivoted by bearings T2 at one end thereof to a cable device frame J and tiltable by means of hydraulic cylinders 18a and 18b. The hydraulic cylinders are pivotally coupled at one end thereof to the frame J of the cable device, and at the other end to the rails P. The cables V may be reeled on wind-up rolls O by using a hydraulic or electric motor M which rotates the wind-up rolls O. The hook at the other end of the cables V may be coupled to the load, such as the load unit 12 such as an interchangeable platform to its fixing points such as lugs having holes in them. The platform 12 may be lowered to the ground by using the cylinders to tilt the rails P, which act as a tilt frame. The platform 12 moves under gravity from the rails P to the ground. Figure 8 shows the equipment in a larger scale.

Figure 5 shows an embodiment where the load unit 12 is a platform that is fixedly on the frame A. Figure 5b shows an ordinary tipping platform 12, The platform 12 is tilted by means of cylinders 13a and 13b.

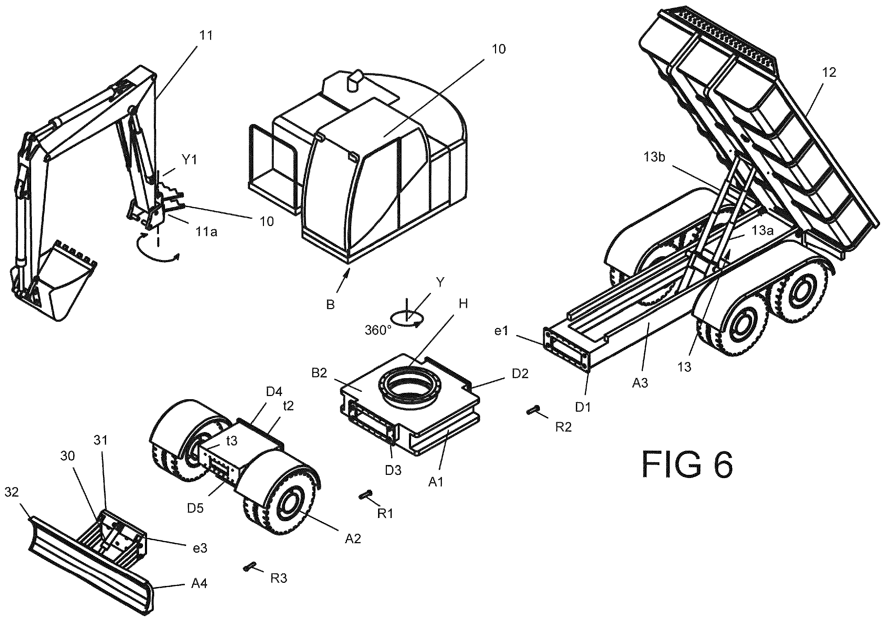

Figure 6 shows an embodiment of the multi-purpose work machine, in which the lower frame A of the vehicle, that is, the undercarriage, is formed of modules to be interconnected, advantageously of three frame modules A1, A2, A3 to be interconnected, and a bulldozer blade module A4.

Figure 6 is an illustrative view of the module system of the invention. In accordance with the invention, the undercarriage A, so the lower frame, is formed of module frame parts A1, A2, and A3 which are connected to each other by screw/flange joints D1, D2, D3, D4 and D5. The screws R1, R2.... have been brought through perforations e1, e2, e3 in the flanges of the module to be connected and to the threaded holes t1, t2, t3 of the second module to be connected, or connected through through-holes to nut parts. In addition, the bulldozer blade module A4 is connected as the front-most module.

The connections of the modules to each other may have been performed by welding the metal structure.

In the Figure, the module A1 is the centre module and comprises a slewing ring H for the swivel bearing of the cabin 10 in a frame plate B2 to rotate the cabin 10 freely around the vertical axis Y. At the same time, the boom structure 11 of the multi-purpose work machine is rotated, which rotates along with the cabin. The cabin 10 and the structures connected to it are referred to as the upper carriage B, or upper frame. The drive motor and hydraulic systems of the device are advantageously associated with the cabin 10 or the vicinity thereof. The slewing ring H for the swivel bearings of the rotating cabin 10 is located in the cover plate B2 of the frame structure of the module A1.

The bulldozer blade module A4 is connected to the axle module A2. The bulldozer blade module A4 comprises a tilt cylinder 30 between the frame part 31 and the bulldozer blade 32. The module A4 is fixed by screws R to the module A2, that is, the axle module. The module A4 may alternatively be another tool, such as a collecting device for gritting sand. The module A2 is fastened to the so-called cabin module A1, which on its upper surface comprises the slewing ring H for the bearings to rotate the cabin by 360 degrees. The rearmost module A3 comprises a tipping device 13 for the load unit 12 in the embodiment for the platform. The tipping device 13 comprises the two hydraulic cylinders 13a and 13b shown in the figure.

The boom structure 11 is adapted to turn not only with the cabin 10 but also around the vertical axis Y1 in relation to the cabin 10 at the joint 11a, said vertical axis Y1 being parallel to the rotating axle of the cabin 10 and the vertical axis Y.

In the embodiment, the frame, or the module A3, is equipped in accordance with the embodiment with a platform, so the module A3 is provided with provisions made for the platform 12, such as holes in the fastenings of the bearing lugs, openings for support lugs, and reinforcements for fastening. Thus, it is possible to use one module A3 for the different variations of the load units 12. such as an interchangeable platform, fixed platform, log trailer platform, hook interchangeable platform, and cable interchangeable platform.

The module A3 is equipped according to the customer's order and needs.

Likewise, the other modules A1, A2, A4 to be connected are chosen and connected to each other according to what the desired multi-purpose work machine is to be like.

Figure 7 illustrates a hook device 15 installed on top of the module A3. The hook interchangeable device 15 comprises a frame surrounding 15a. To one end thereof, the hydraulic cylinders 16a and 16n have been pivoted, and to the other end the turning frame 17 of the hook device by bearings T. At their other end, the hydraulic cylinders are connected to the turning frame 17 of the hook device. The gripping hook K of the hook interchangeable platform device may be brought behind the gripping bar 18 in the load unit 12, whereby as the turning frame 17 of the hydraulic cylinders 16a, 16b is tilted, the load unit 12, a timber bunk interchangeable platform, that is, a log trailer frame in the embodiment, is pulled on top of the module A3. There is at least one hydraulic cylinder 16a, 16b. In the embodiment of the figure, there are two of them.

Figure 8 shows a second alternative outfit. In this embodiment, the module A3 is equipped with a cable device 14. Its operation is as described on the basis of Figure 4. The module A3 is equipped with a bogie G.

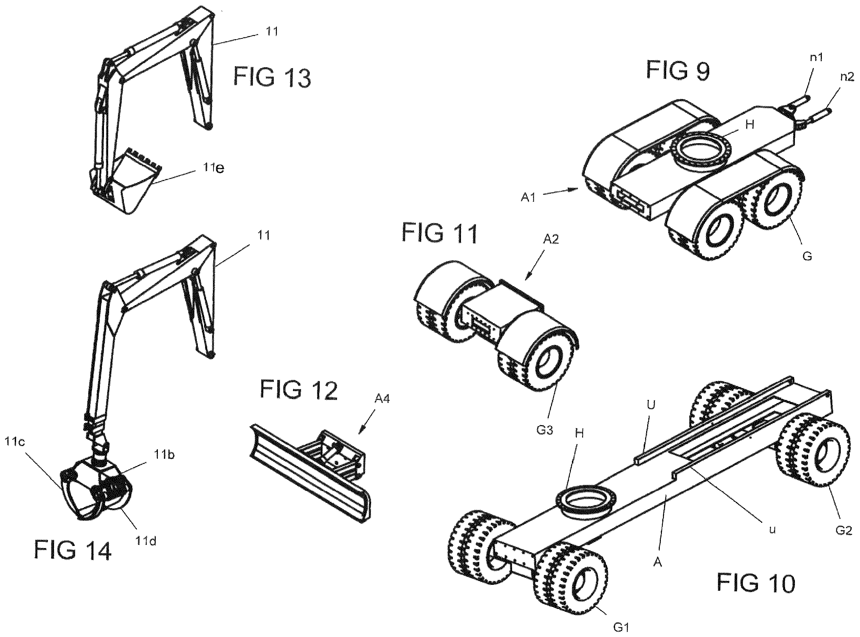

Figure 9 shows an alternative module A1 which for the purpose of frame-steering comprises cylinders n1 and n2, which may be connected to the rearmost load unit module A3. The module comprises the bogie G. On top of the frame module there is the slewing bearing ring H for the turning bearings of the cabin 10.

The bogie G is advantageously a driving bogie, so all the wheels of its axles get their driving force from an internal combustion engine or electric motor or hydraulic motor located in the module. The bogie G is additionally bearing-mounted to the module frame so as to rock or swing.

Figure 10 shows the most common embodiment of the invention, in which the undercarriage A is a uniform structure consisting of one part. The module comprise the bearing ring H, rails u for the platform, to which the platform is fixed, and axles G1 and G2 at both ends of the frame A. Both the wheels of the front axles and the wheels of the rear axles are advantageously turning and driven wheels. The driving speed achievable by the multi-purpose work machine is the maximum speed for a traffic tractor.

Figure 11 shows the centre module A2 which only comprises an axle G3 and rubber wheels on it, adapted to steer the multi-purpose work machine and thus being turning and hence steering.

Figure 12 shows a bulldozer blade module A4.

Figure 13 shows a boom embodiment 11, which comprises a bucket 11e.

Figure 14 shows a boom embodiment which comprises a grab 11b or similar to grab logs or similar. The gripping jaws 11c and 11d of the grab 11b are motor-driven, such as cylinders, and a load may be squeezed between them.

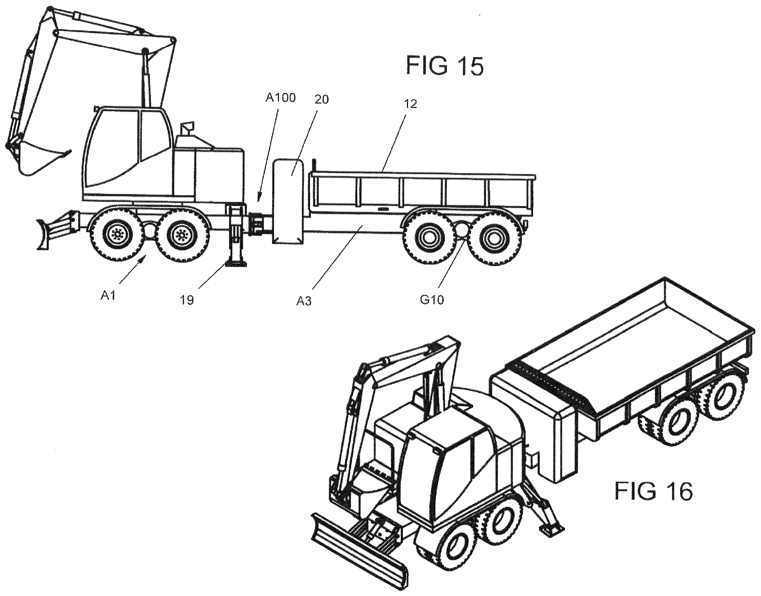

Figures 15 and 16 show a multi-purpose work machine provided with support legs 19 and comprises an additional power source 20 at one end of the module load unit module A3, which produces additional energy for the rear axles and rear wheels G10 for load transport purposes.

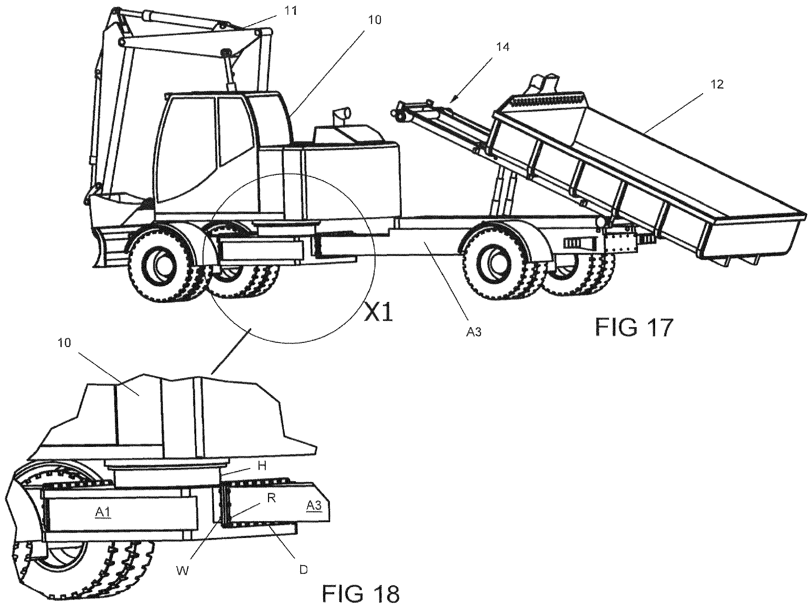

Figure 17 shows an area X1 which in Figure 18 is shown in a larger scale. The modules A1 and A3 are connected to each other by a flange joint D.

The bolts R are brought through the holes in the flanges, and a nut W is placed to the other end of each bolt R in question. By turning the nut, the flanges have been pulled against each other and the joint tightened. As a second connecting option there is welding. The modules are welded to each other.

The multi-purpose work machine may by wheel-steered or frame-steered. The number of axles is 2 to 6.

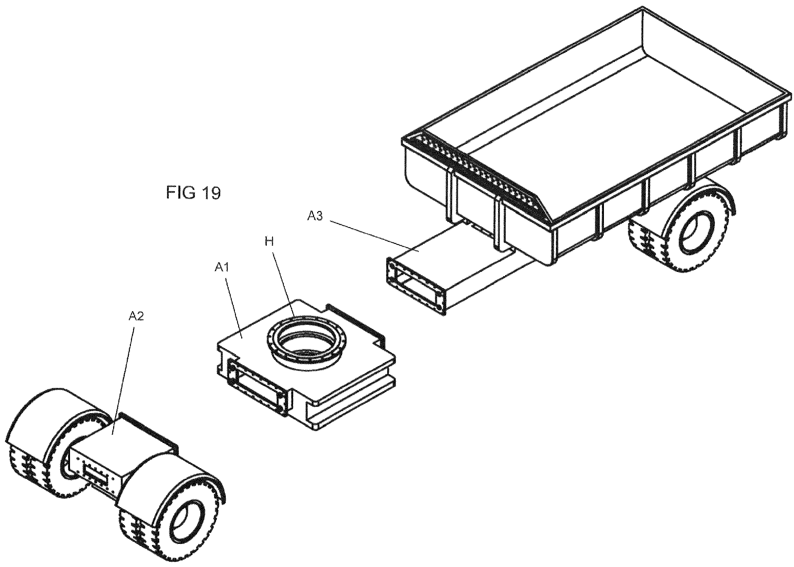

Figure 19 shows a solution with a fixed platform. The platform 12 is fixed to the module A3. To the module A3 is connected the centre module A1, which comprises the slewing bearing ring H of the cabin 10, and the module A1 is further connected to the axle module A2. The modules A1, A2, A3 are interconnected by screw/flange joints in the manner of quick clamping.

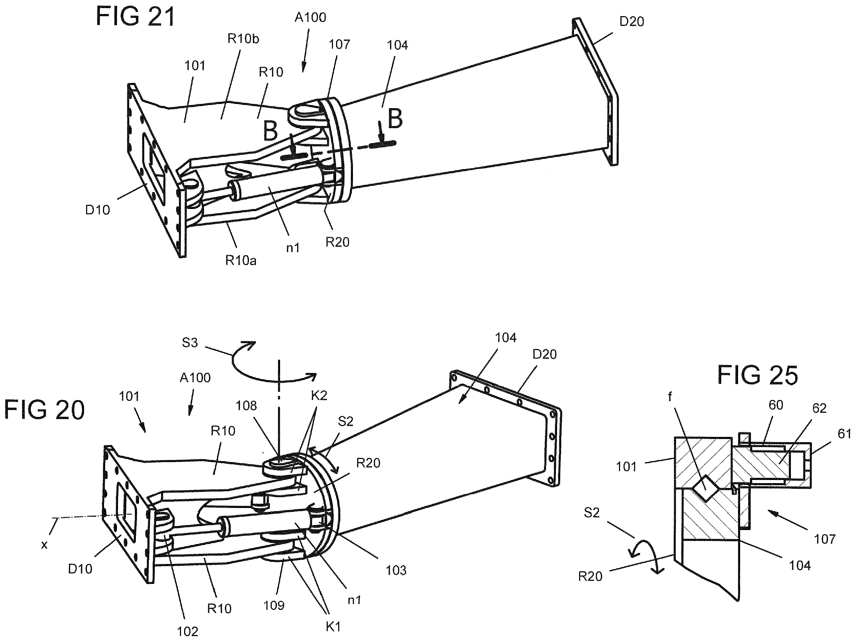

Figures 20 to 24 show a so-called frame-steer module A100. In the module half 101, it comprises a joint 102 for the cylinder n1, connected to a moving frame part R10, and a joint 103 at the other end of the cylinder n1, connected to a round frame plate R20 of the frame half 101. The frame part R10 is pivoted to turn (arrow S3) at joints 108 and 109 in relation to the frame R20.

Correspondingly, the cylinder n2 comprises a joint 105 in the module half 101 on its turning frame part R10, and a joint 106 at the other end of the cylinder, connected to the round frame plate R20 of the half on the other side of the centre line X. The cylinders n1 and n2 are advantageously hydraulic cylinders. They are thus used to turn the turning frame part R10 of the half 101 and thus a rotation and a turning motion S3 is performed between the frame halves 101 and 104.

Joint axles 108, 109 pass through the lugs K1, K2 and the holes in the frame part R10. The lugs K1, K2 are welded to the round plate R20.

The frame part R10 is formed of plate-like parts R10a and R10b, which connect to the flange part D10. So, a placement and moving space is formed for the cylinders n1 and n2 between the parts R10a and R10b.

The frame part R10 with the structures connected to it are adapted to rotate on the joints 108, 109 in relation to the frame part R20.

The frame part R20 of the half 101 is a round plate, which acts as the base frame part and is, together with the devices connected to it, adapted to rotate by means of a slewing ring bearing in relation to the other frame part 104. The turning ring bearing is thus between the halves 101 and 104.

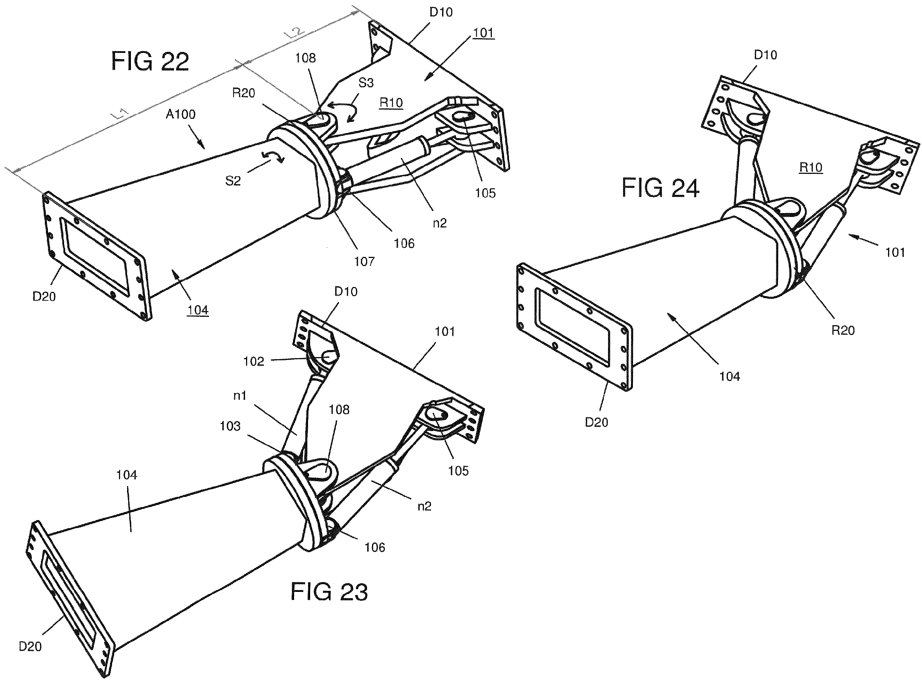

The half 104 is along its length L1 substantially longer than the half 101 along its length L2. It widens conically towards the connecting flange D20. The choice of the length makes sure that the module parts of the vehicle turn in relation to each other also in cases where the angle of the longitudinal axis of the load unit and drive unit has become large. In Figure 22, the rotation of the frame half 104 is denoted by the arrow S2.

The half 101 advantageously connects to the frame module A1 comprising a control cabin such as the cabin 10, and the half 104 advantageously connects to the frame module A3 comprising a platform or similar. The frame modules A1, A3 are turned by means of the cylinders n1 and n2 and thus the movable multi-purpose work machine is steered.

The halves 101 and 104 connect to each other at swivel 107 which may comprise bearing elements f such as rolls or cone bearing parts or bearing rolls on the circumference. The swivel 107 allows the halves 101 and 104 to rotate (arrow S2) in relation to each other. The frame plate R10 of the half 101, with the parts connected thereto, are adapted to turn (arrow S2) in relation to the frame half 104 at the swivel bearing. The frame halves 101 and 104 of the halves may be locked in relation to each other for the duration of loading, for example, by the cylinder or brake 60. This may be implemented, for example, by locking the circumferences of the bearing to each other with the brake 60 or cylinder.

In Figure 25, the brake 60 comprises a brake piston 62. Through an opening 61, pressure oil is brought to the cylinder space and the brake piston 62 is pressed against the mating surface, and the rotation S2 of the bearing halves in relation to each other is prevented. The rotation S3 is at the same time prevented by locking the cylinders n1 and n2. This way, for the duration of loading, the joint A100 may be stiffened and the loading situation kept stable. The brake frame of the brake 60 is connected to one frame half 104, and as the piston 62 of the brake 60 is affected by the pressure of the hydraulic oil, the piston 62 is moved towards the other frame half 101, against its surface, whereby the frame halves 104, 101 are locked to each other and the rotation S2 is prevented.

One frame half 101 comprises fastening means D10 and the other frame half 104 comprises fastening means D20. With the fastening means D10 and D20, the module A100 may be detachably mounted to the different modules of the multi-purpose work machine advantageously so that the half 101 is connected to the cabin and control cabin module, and the half 104 is connected to the module comprising the load module.

The fastening means D10 and D20 are in the embodiments of the figures formed of perforated flanges and screws and nuts, or only of screws and flanges as well as screws holes of the flanges. The connection of the frame steering module A100 to other modules may also be carried out by welding. The machine is of metal.

Figure 25 shows a cross-section B-B of Figure 21, The round plate like base frame R20 of the frame half 101 with the structures R10, n1, n2 rotates on bearings 107 in relation to the frame half 104. The rotation is denoted by the arrow S2.

A person skilled in the art will find it obvious that, as technology advances, the basic idea of the invention may be implemented in many different ways. The invention and its embodiments are thus not restricted to the above-described examples but may vary within the scope of the claims.

## Claims

1. A multi-purpose work machine, comprising an upper carriage, that is, an upper frame (B) and on it a cabin (10) and multi-purpose boom (11), which together turn freely around a vertical axis (Y), and which multi-purpose boom (11) comprises a tool, such as a bucket (11e), connected to it
and under the upper carriage (B) an undercarriage, that is, a lower frame (A) which comprises axles (50a, 51a...) and on them wheels (50b, 51b...), and on top of the undercarriage (A) a load unit (12), whereby the boom (11) with the tool is for loading onto the load unit (12),
**characterised in that** the load unit (12) is an interchangeable platform and that the multi-purpose work machine comprises a hook device or cable device to lower the platform onto the ground or to lift it from the ground on top of the lower frame (A).

2. A multi-purpose work machine as claimed in claim 1, **characterised in that** the undercarriage (A) comprises a hook device (15) which by its frame surrounding(15a) is connected to the undercarriage to its frame, the hook device (15) comprising a hydraulic cylinder/cylinders (16a, 16b) and a turning frame (17) of the hook device, which is pivoted by a bearing (T) at an end of the turning frame to turn turned by the hydraulic cylinder (16a, 16b), whereby a hook (K) at the other end of the frame (17) is connectable to a gripping bar (18) on the interchangeable platform, whereby the interchangeable platform (12) may be lifted by the hook device (15) and lowered on top of the frame of the undercarriage from the ground and from on top of it to the ground.

3. A multi-purpose work machine as claimed in claim 1, **characterised in that** the undercarriage (A) comprises in it a cable device (14) which comprises tiltable rails (P) that at one end comprise a bearing/bearings (T2), supported by which the rails (P) may be tilted, and **in that** between the frame (J) of the cable device (14) and the rails (P) there is a hydraulic cylinder/cylinders (18a, 18b) which pivotally connect to the frame (J) of the cable device and at the other end pivotally to the rails (P) and **in that** there are cables (V) that may be reeled by a motor (M) to wind-up rolls (O) at one end of the rails (P) and the other end of the wire (V) is connectable to the interchangeable platform whereby when the rails (P) have been tilted by the cylinder device (18a, 18b) the interchangeable platform (12) may be lifted by using the motor (M) onto the rails and by way of gravity the interchangeable platform (12) may be lowered to the ground from the rails (P).

4. A multi-purpose work machine as claimed in any one of the preceding claims, **characterised in that** the cabin (10) and boom (11) freely turn around the vertical axis (Y) of the machine by at least 360 degrees, and **in that**
the multi-purpose work machine in its undercarriage comprises at least two frame modules (A1, A2, A3, A4) which are connected to each other end-to-end.

5. A multi-purpose work machine as claimed in any one of the preceding claims, **characterised in that** the lower frame, that is, the undercarriage (A) comprises at least two frame modules (A1, A2...) which are connected to each other by flange joints (D1, D2, D3...) which thus act as connection means between the modules.

6. A multi-purpose work machine as claimed in claim 5, **characterised in that** bolts and/or screws (R) are used in the flange joints.

7. A multi-purpose work machine as claimed in any one of the preceding claims, **characterised in that** the undercarriage (A) comprises a frame module (A1) which on its centre region comprises a bearing ring (H) for the cabin (10), and connecting flanges (D) at both ends.

8. A multi-purpose work machine as claimed in any one of the preceding claims, **characterised in that** the multi-purpose boom (110) is a boom comprising a grab for gripping to goods and transferring them.

9. A multi-purpose work machine as claimed in any one of the preceding claims 1 to 7, **characterised in that** the multi-purpose boom (11) comprises a jaw crusher or similar.

10. A multi-purpose work machine as claimed in any one of the preceding claims, **characterised in that** the lower frame (A) comprises at least a first frame module (A1) and a second frame module (A3), **in that** the first frame module (A1) comprises hydraulic cylinders (n1, n2) to connect the first frame module (A1) to the second frame module (A3) to implement frame-steering for the multi-purpose work machine, and it that the first frame module (A1) comprises on it upper surface a bearing ring (H) for the cabin or control cabin (10).

11. A multi-purpose work machine as claimed in any one of the preceding claims, **characterised in that** the undercarriage has such a frame module (A2, A3) of the undercarriage (A) that it comprises an axle or bogie (G3, G).

12. A multi-purpose work machine as claimed in any one of the preceding claims, **characterised in that** as the front module (A4) of the undercarriage (A) there is a module comprising a bulldozer blade.

13. A multi-purpose work machine as claimed in claim 10, **characterised in that** in the undercarriage there is a separate frame-steering module (A100) which comprises connection means (D10, D20) at both ends of the module to connect the module (A100) detachably to the frame parts of the multi-purpose work machine, and **in that** the frame-steering module (A100) is formed of two frame halves (101, 104) which are pivoted to each other, and **in that** the frame halves (101, 104) comprise between them a swivel (107) whereby the frame halves (101, 104) may rotate (arrow S2) in relation to each other, and **in that** one cylinder (n1) is at its end pivotally connected to one half (101) to its turning frame part (R10) and **in that** at its other end the cylinder (n1) is pivotally connected to the frame part (R20) and likewise the second cylinder (n2) is pivotally connected to one half (101) to its turning frame part (R10) and at its other end pivotally to the frame part (R20) and **in that** the first (D10) of the connecting means are located in one half (101) and the second connecting means (D20) in the other half (104) of the module (A100).

14. A multi-purpose work machine as claimed in claim 13, **characterised in that** the connecting means (D10, D20) are formed of a perforated flange and **in that** the frame part (101) comprises a base frame part (R20) and, turnably connected to it, a movable frame part (R10) which comprises a connecting flange (D10) and there is a turning joint (108, 109) between the frame parts (R10 and R20) and that the rotating turn (S3) of the part (R10) is performed with cylinders (n1, n2) and that the part (R20) with the structures connected thereto are rotatable (S2) in relation to the half (104) on the swivel (107), and **in that** the half (104) is connectable to the load module (A3) by a flange joint or by welding and **in that** the frame half (101) is connected to the module comprising the cabin (10) by a flange joint or by welding.

15. A multi-purpose work machine as claimed in claim 14, **characterised in that** the swivel (107) is formed of rolling means (f) on a ring, such as bearing rolls, or bearing balls, or cone bearings.

16. A multi-purpose work machine as claimed in claim 1, **characterised in that** the control cabin (10) is a cabin that comprises the steering equipment of the machine and room for an operator of the machine.

17. A multi-purpose work machine as claimed in claim 1, **characterised in that** the cabin (10) is a base for the remote control means such as a camera.

18. A multi-purpose work machine as claimed in claim 4, **characterised in that** the frame modules (A1, A2, A100, A3) are interconnected by welding.

19. A multi-purpose work machine as claimed in any one of the preceding claims, **characterised in that** the boom (11) which comprises a tool such as a bucket (11e) is adapted to turn not only with the cabin (10) around the vertical axis (Y) but also in relation to it at a joint (11a) around the vertical axis (Y1) parallel to the vertical axis (Y), the boom (11) comprising the joint (11a) for the turning in question.

20. A multi-purpose work machine as claimed in claims 13, 14 or 15, **characterised in that** the swivel (107) of the frame-steering module (A100) is provided with a brake (60), by means of which the rotation (S2) of the frame halves in relation to each other is prevented, whereby the frame-steering module (A100) may be stiffened for the duration of loading for the multi-purpose work machine to be stable during loading and the boom (11) operation.

## Patentansprüche

1. Eine Mehrzweckarbeitsmaschine umfassend einem oberen Wagen, das heißt einem oberen Rahmen (B), und darauf einer Kabine (10) und einem Mehrzweckausleger (11), die sich zusammen frei um eine vertikale Achse (Y) drehen, und welcher Mehrzweckausleger (11) ein Werkzeug umfasst, wie eine Schaufel (11e), das damit verbunden ist,
und, unter dem oberen Wagen (B), einem Fahrgestell, das heißt einem unteren Rahmen (A) mit Achsen (50a, 51a...) und entsprechenden Rädern (50b, 51b...), und über dem Fahrgestell (A) einer Ladeinheit (12), wodurch der Ausleger (11) mit dem Werkzeug zum Laden auf die Ladeeinheit (12) dient,
**dadurch gekennzeichnet, dass** die Ladeeinheit (12) eine austauschbare Plattform ist und dass die Mehrzweckarbeitsmaschine eine Hakenvorrichtung oder Kabelvorrichtung aufweist, um die Plattform auf den Boden abzusenken oder vom Boden über den unteren Rahmen (A) anzuheben.

2. Eine Mehrzweckarbeitsmaschine nach Anspruch 1, **dadurch gekennzeichnet, dass** das Fahrgestell (A) eine Hakenvorrichtung (15) umfasst, die über ihren umgebenden Rahmen (15a) mit dem Fahrgestell an dessen Rahmen verbunden ist, wobei die Hakenvorrichtung (15) einen oder mehrere Hydraulikzylinder (16a, 16b) und einen Drehrahmen (17) der Hakenvorrichtung umfasst, der über ein Lager (T) an einem Ende des Drehrahmens geschwenkt wird, um vom Hydraulikzylinder (16a, 16b) gedreht zu werden, wodurch ein Haken (K) am anderen Ende des Rahmens (17) mit einem Griffbügel (18) auf der austauschbaren Plattform verbunden werden kann, wodurch die austauschbare Plattform (12) durch die Hakenvorrichtung (15) angehoben und über den Rahmen des Fahrgestells vom Boden und von über dem Rahmen auf den Boden abgesenkt werden kann.

3. Eine Mehrzweckarbeitsmaschine nach Anspruch 1, **dadurch gekennzeichnet, dass** das Fahrgestell (A) eine Kabelvorrichtung (14) umfasst, die kippbare Schienen (P) umfasst, die an einem Ende ein oder mehrere Lager (T2) umfassen, wobei die dadurch abgestützten Schienen (P) gekippt werden können, und dass zwischen dem Rahmen (J) der Kabelvorrichtung (14) und den Schienen (P) ein oder mehrere Hydraulikzylinder (18a, 18b) vorhanden sind, die schwenkbar mit dem Rahmen (J) der Kabelvorrichtung und am anderen Ende schwenkbar mit den Schienen (P) verbunden sind, und dass Kabel (V) existieren, die über einen Motor (M) aufgewickelt werden können, um Rollen (O) an einem Ende der Schienen (P) aufwickeln zu können, und wobei das andere Ende des Kabels (V) mit der austauschbaren Plattform verbunden werden kann, wodurch, wenn die Schienen (P) durch die Zylindervorrichtung (18a, 18b) gekippt wurden, die austauschbare Plattform (12) durch Verwendung des Motors (M) auf die Schienen angehoben und die austauschbare Plattform (12) über die Schwerkraft von den Schienen (P) auf den Boden abgesenkt werden kann.

4. Eine Mehrzweckarbeitsmaschine nach einem der vorstehenden Ansprüche, **dadurch gekennzeichnet, dass** sich die Kabine (10) und der Ausleger (11) um mindestens 360 Grad frei um die vertikale Achse (Y) der Maschine drehen, und dass
die Mehrzweckmaschine im Fahrgestell mindestens zwei Rahmenmodule (A1, A2, A3, A4) im Fahrgestell umfasst, die durchgängig miteinander verbunden sind.

5. Eine Mehrzweckarbeitsmaschine nach einem der vorstehenden Ansprüche, **dadurch gekennzeichnet, dass** der untere Rahmen, das heißt das Fahrgestell (A), mindestens zwei Rahmenmodule (A1, A2...) umfasst, die über Flanschverbindungen (D1, D2, D3...) miteinander verbunden sind, die somit als Verbindungsmittel zwischen den Modulen dienen.

6. Eine Mehrzweckarbeitsmaschine nach Anspruch 5, **dadurch gekennzeichnet, dass** Bolzen und/oder Schrauben (R) bei den Flanschverbindungen verwendet werden.

7. Eine Mehrzweckarbeitsmaschine nach einem der vorstehenden Ansprüche, **dadurch gekennzeichnet, dass** das Fahrgestell (A) ein Rahmenmodul (A1), das im Mittelbereich einen Lagerring (H) für die Kabine (10) besitzt, sowie Verbindungsflansche (D) an beiden Enden umfasst.

8. Eine Mehrzweckarbeitsmaschine nach einem der vorstehenden Ansprüche, **dadurch gekennzeichnet, dass** der Mehrzweckausleger (110) ein Ausleger mit einem Greifer zum Greifen und Übertragen von Waren ist.

9. Eine Mehrzweckarbeitsmaschine nach einem der vorstehenden Ansprüche 1 bis 7, **dadurch gekennzeichnet, dass** der Mehrzweckausleger (11) einen Backenbrecher oder gleichwertig umfasst.

10. Eine Mehrzweckarbeitsmaschine nach einem der vorstehenden Ansprüche, **dadurch gekennzeichnet, dass** der untere Rahmen (A) mindestens ein erstes Rahmenmodul (A1) und ein zweites Rahmenmodul (A3) umfasst, dass das erste Rahmenmodul (A1) Hydraulikzylinder (n1, n2) umfasst, um das erste Rahmenmodul (A1) mit dem zweiten Rahmenmodul (A3) zu verbinden, damit eine Rahmenlenkung für die Mehrzweckarbeitsmaschine integriert werden kann, und dass das erste Rahmenmodul (A1) auf dessen oberen Fläche einen Lagerring (H) für die Kabine oder Steuerkabine (10) umfasst.

11. Eine Mehrzweckarbeitsmaschine nach einem der vorstehenden Ansprüche, **dadurch gekennzeichnet, dass** das Fahrgestell ein Rahmenmodul (A2, A3) des Fahrgestells (A) mit einer Achse oder einem Drehgestell (G3, G) umfasst.

12. Eine Mehrzweckarbeitsmaschine nach einem der vorstehenden Ansprüche, **dadurch gekennzeichnet, dass**, wie das Frontmodul (A4) des Fahrgestells (A), ein Modul mit einem Räumschild vorhanden ist.

13. Eine Mehrzweckarbeitsmaschine nach Anspruch 10, **dadurch gekennzeichnet, dass** im Fahrgestell ein separates Rahmenlenkungsmodul (A100) vorhanden ist, das Verbindungsmittel (D10, D20) an beiden Enden des Moduls umfasst, um das Modul (A100) lösbar mit den Rahmenteilen der Mehrzweckarbeitsmaschine zu verbinden, und dass das Rahmenlenkungsmodul (A100) aus zwei Rahmenhälften (101, 104) besteht, die schwenkbar zueinander angeordnet sind, und dass die Rahmenhälften (101, 104) dazwischen ein Drehgelenk (107) umfassen, wodurch die Rahmenhälften (101, 104) in Bezug zueinander rotieren können (Pfeil S2), und dass ein Zylinder (n1) an seinem Ende schwenkbar mit einer Hälfte (101) zu dessen Drehrahmenteil (R10) verbunden ist und dass an dessen anderem Ende der Zylinder (n1) schwenkbar mit dem Rahmenteil (R20) verbunden ist, und wobei ebenso der zweite Zylinder (n2) schenkbar mit einer Hälfte (101) zu dessen Drehrahmenteil (R10) und an dessen anderem Ende schwenkbar mit dem Rahmenteil (R20) verbunden ist, und dass das erste (D10) der Verbindungsmittel in einer Hälfte (101) und das zweite Verbindungsmittel (D20) in der anderen Hälfte (104) des Moduls (A100) untergebracht ist.

14. Eine Mehrzweckarbeitsmaschine nach Anspruch 13, **dadurch gekennzeichnet, dass** die Verbindungsmittel (D10, D20) aus einem gelochten Flansch geformt sind und dass der Rahmenteil (101) einen Basisrahmenteil (R20) und, drehbar damit verbunden, einen beweglichen Rahmenteil (R10) umfasst, der einen Verbindungsflansch (D10) umfasst, und wobei ein drehbares Gelenk (108, 109) zwischen den Rahmenteilen (R10 und R20) angeordnet ist und dass die rotierende Drehbewegung (S3) des Teils (R10) mit Zylindern (n1, n2) ausgeführt wird und dass der Teil (R20) mit damit verbundenen Strukturen in Bezug zur Hälfte (104) am Drehgelenk (107) rotierbar ist (S2), und dass die Hälfte (104) mit dem Lademodul (A3) über eine Flanschverbindung oder durch Schweißen verbunden werden kann und dass die Rahmenhälfte (101) mit dem Modul mit der Kabine (10) über eine Flanschverbindung oder durch Schweißen verbunden ist.

15. Eine Mehrzweckarbeitsmaschine nach Anspruch 14, **dadurch gekennzeichnet, dass** das Drehgelenk (107) aus Rollmitteln (f) auf einem Ring, wie Lagerrollen oder Lagerkugeln oder Kugellagern, besteht.

16. Eine Mehrzweckarbeitsmaschine nach Anspruch 1, **dadurch gekennzeichnet, dass** die Steuerkabine (10) eine Kabine mit der Lenkanlage der Maschine und Raum für einen Maschinenbediener ist.

17. Eine Mehrzweckarbeitsmaschine nach Anspruch 1, **dadurch gekennzeichnet, dass** die Kabine (10) eine Basis für Fernbedienungsmittel, wie eine Kamera, darstellt.

18. Eine Mehrzweckarbeitsmaschine nach Anspruch 4, **dadurch gekennzeichnet, dass** die Rahmenmodule (A1, A2, A100, A3) durch Schweißen miteinander verbunden sind.

19. Eine Mehrzweckarbeitsmaschine nach einem der vorstehenden Ansprüche, **dadurch gekennzeichnet, dass** der Ausleger (11) mit einem Werkzeug, wie einer Schaufel (11e), dafür ausgelegt ist, sich nicht nur mit der Kabine (10) um die vertikale Achse (Y), sondern auch in Bezug dazu an einem Gelenk (11a) um die vertikale Achse (Y1) parallel zur vertikalen Achse (Y) zu drehen, wobei der Ausleger (11) das Gelenk (11a) für die entsprechende Drehung aufweist.

20. Eine Mehrzweckarbeitsmaschine nach einem der Ansprüche 13, 14 oder 15, **dadurch gekennzeichnet, dass** das Drehgelenk (107) des Rahmenlenkungsmoduls (A100) mit einer Bremse (60) bereitgestellt wird, über welche die Rotation (S2) der Rahmenhälften in Bezug zueinander verhindert wird, wodurch das Rahmenlenkungsmodul (A100) für die Ladedauer der Mehrzweckarbeitsmaschine versteift werden kann, um bei Ladevorgang und Betätigung des Auslegers (11) stabil zu bleiben.

## Revendications

1. Machine de travail à usages multiples comprenant un chariot supérieur, c'est-à-dire un bâti supérieur (B) et sur ce dernier, une cabine (10) et un bras à usages multiples (11), qui tournent ensemble librement autour d'un axe vertical (Y) et lequel bras à usages multiples (11) comprend un outil, tel qu'un godet (11e), raccordé à ce dernier,
et sous le chariot supérieur (B), un châssis, c'est-à-dire un bâti inférieur (A) qui comprend des essieux (50a, 51a ...) et sur ces derniers, des roues (50b, 51b, ...), et sur le dessus du châssis (A), une unité de chargement (12), moyennant quoi le bras (11) avec l'outil est prévu pour charger sur l'unité de chargement (12),
**caractérisée en ce que** l'unité de chargement (12) est une plateforme interchangeable et que la machine de travail à usages multiples comprend un dispositif de crochet ou un dispositif de câble pour abaisser la plateforme sur le sol ou pour la lever du sol sur le dessus du bâti inférieur (A).

2. Machine de travail à usages multiples selon la revendication 1, **caractérisée en ce que** le châssis (A) comprend un dispositif de crochet (15) qui, grâce à son entourant de bâti (15a), est raccordé au châssis jusqu'à son bâti, le dispositif de crochet (15) comprenant un cylindre / des cylindres hydraulique(s) (16a, 16b) et un bâti rotatif (17) du dispositif de crochet, qui est pivoté par un palier (T) au niveau d'une extrémité du bâti rotatif pour tourner, en rotation, grâce au cylindre hydraulique (16a, 16b), moyennant quoi un crochet (K) au niveau de l'autre extrémité du bâti (17), peut être raccordé à une barre de préhension (18) sur la plateforme interchangeable, moyennant quoi la plateforme interchangeable (12) peut être levée par le dispositif de crochet (15) et abaissée sur le dessus du bâti du châssis du sol et du dessus de ce dernier au sol.

3. Machine de travail à usages multiples selon la revendication 1, **caractérisé en ce que** le châssis (A) comprend dans ce dernier, un dispositif de câble (14) qui comprend des rails inclinables (P) qui, au niveau d'une extrémité, comprennent un palier / des paliers (T2), supportés par lesquels, les rails (P) peuvent être inclinés, et **en ce qu'**entre le bâti (J) du dispositif de câble (14) et les rails (P), on trouve un cylindre / des cylindres hydraulique(s) (18a, 18b) qui se raccordent de manière pivotante au bâti (J) du dispositif de câble et au niveau de l'autre extrémité, de manière pivotante, aux rails (P) et **en ce qu'**il y a des câbles (V) qui peuvent être enroulés par un moteur (M) sur des rouleaux d'enroulement (O) au niveau d'une extrémité des rails (P) et l'autre extrémité du câble (V) peut être raccordée à la plateforme interchangeable, moyennant quoi, lorsque les rails (P) ont été inclinés par le dispositif de cylindre (18a, 18b), la plateforme interchangeable (12) peut être levée en utilisant le moteur (M) sur les rail et au moyen de la gravité, la plateforme interchangeable (12) peut être abaissée sur le sol depuis les rails (P).

4. Machine de travail à usages multiples selon l'une quelconque des revendications précédentes, **caractérisée en ce que** la cabine (10) et le bras (11) tournent librement autour de l'axe vertical (Y) de la machine selon une valeur d'au moins 360 degrés, et **en ce que** :
la machine de travail à usages multiples, dans son châssis, comprend au moins deux modules de bâti (A1, A2, A3, A4) qui sont raccordés entre eux bout à bout.

5. Machine de travail à usages multiples selon l'une quelconque des revendications précédentes, **caractérisé en ce que** le bâti inférieur, c'est-à-dire le châssis (A), comprend au moins deux modules de bâti (A1, A2, ...) qui sont raccordés entre eux par des joints à bride (D, D2, D3, ...) qui servent ainsi de moyens de raccordement entre les modules.

6. Machine de travail à usages multiples selon la revendication 5, **caractérisée en ce que** l'on utilise des boulons et/ou des vis (R) dans les joints à bride.

7. Machine de travail à usages multiples selon l'une quelconque des revendications précédentes, **caractérisée en ce que** le châssis (A) comprend un module de bâti (A1) qui, sur sa région centrale, comprend une bague de palier (H) pour la cabine (10), et des brides de raccordement (D) au niveau des deux extrémités.

8. Machine de travail à usages multiples selon l'une quelconque des revendications précédentes, **caractérisée en ce que** le bras à usages multiples (110) est un bras comprenant un grappin pour saisir des marchandises et les transférer.

9. Machine de travail à usages multiples selon l'une quelconque des revendications 1 à 7, **caractérisée en ce que** le bras à usages multiples (11) comprend un concasseur à mâchoires ou similaire.

10. Machine de travail à usages multiples selon l'une quelconque des revendications précédentes, **caractérisé en ce que** le bâti inférieur (A) comprend au moins un premier module de bâti (A1) et un second module de bâti (A3), **en ce que** le premier module de bâti (A1) comprend des cylindres hydrauliques (n1, n2) pour raccorder le premier module de bâti (A1) au second module de bâti (A3) afin de mettre en œuvre un châssis directionnel pour la machine de travail à usages multiples, et **en ce que** le premier module de bâti (A1) comprend, sur sa surface supérieure, une bague de palier (H) pour la cabine ou la cabine de commande (10).

11. Machine de travail à usages multiples selon l'une quelconque des revendications précédentes, **caractérisée en ce que** le châssis a un module de bâti (A2, A3) du châssis (A) tel qu'il comprend un essieu ou bogie (G3, G).

12. Machine de travail à usages multiples selon l'une quelconque des revendications précédentes, **caractérisée en ce que**, en tant que module avant (A4) du châssis (A), on trouve un module comprenant une lame de bulldozer.

13. Machine de travail à usages multiples selon la revendication 10, **caractérisée en ce que** dans le châssis, on trouve un module de châssis directionnel (A100) séparé qui comprend un moyen de raccordement (D10, D20) aux deux extrémités du module pour raccorder le module (A100) de manière détachable aux parties de bâti de la machine de travail à usages multiples, et **en ce que** le module de châssis directionnel (A100) est formé avec deux moitiés de bâti (101, 104) qui sont pivotées l'une par rapport à l'autre, et **en ce que** les moitiés de bâti (101, 104) comprennent entre elles, un pivot (107), moyennant quoi les moitiés de bâti (101, 104) peuvent tourner (flèche S2) l'une par rapport à l'autre, et **en ce qu'**un cylindre (n1) est, au niveau de son extrémité, raccordé de manière pivotante à une moitié (101) jusqu'à sa partie de bâti rotative (R10) et **en ce qu'**au niveau de son autre extrémité, le cylindre (n1) est raccordé, de manière pivotante, à la partie de bâti (R20) et de même, le second cylindre (n2) est raccordé de manière pivotante à une moitié (101) jusqu'à sa partie de bâti rotative (R10) et au niveau de son autre extrémité, de manière pivotante par rapport à la partie de bâti (R20) et **en ce que** les premiers (D10) des moyens de raccordement sont positionnés dans une moitié (101) et les seconds moyens de raccordement (D20) dans l'autre moitié (104) du module (A100).

14. Machine de travail à usages multiples selon la revendication 13, **caractérisée en ce que** les moyens de raccordement (D10, D20) sont formés avec une bride perforée et **en ce que** la partie de bâti (101) comprend une partie de bâti de base (R20), et raccordée de manière rotative à cette dernière, une partie de bâti mobile (R10) qui comprend une bride de raccordement (D10) et on trouve un joint rotatif (108, 109) entre les parties de bâti (R10 et R20) et que la rotation rotative (S3) de la partie (R10) est réalisée avec les cylindres (n1, n2) et que la partie (R20) avec les structure raccordées à cette dernière, peut tourner (S2) par rapport à la moitié (104) sur le pivot (107), et **en ce que** la moitié (104) peut être raccordée au module de chargement (A3) par un joint à bride ou par soudage et **en ce que** la moitié de bâti (101) est raccordée au module comprenant la cabine (10) par un joint à bride ou par soudage.

15. Machine de travail à usages multiples selon la revendication 14, **caractérisée en ce que** le pivot (107) est formé avec des moyens de roulement (f) sur une bague, tels que des galets de roulement ou des billes de roulement ou des cônes de roulement.

16. Machine de travail à usages multiples selon la revendication 1, **caractérisée en ce que** la cabine de commande (10) est une cabine qui comprend l'équipement de direction de la machine et le compartiment pour un opérateur de la machine.

17. Machine de travail à usages multiples selon la revendication 1, **caractérisée en ce que** la cabine (10) est une base pour les moyens de commande à distance, telle qu'une caméra.

18. Machine de travail à usages multiples selon la revendication 4, **caractérisée en ce que** les modules de bâti (A1, A2, A100, A3) sont interconnectés par soudage.

19. Machine de travail à usages multiples selon l'une quelconque des revendications précédentes, **caractérisée en ce que** le bras (11) qui comprend un outil tel qu'un godet (11e) est adapté pour tourner non seulement avec la cabine (10) autour de l'axe vertical (Y) mais également par rapport à cette dernière au niveau d'un joint (11a) autour de l'axe vertical (Y1) parallèle à l'axe vertical (Y), le bras (11) comprenant le joint (11a) pour la rotation en question.

20. Machine de travail à usages multiples selon les revendications 13, 14 ou 15, **caractérisée en ce que** le pivot (107) du module de châssis directionnel (A100) est prévu avec un frein (60), au moyen duquel la rotation (S2) des moitiés de bâti l'une avec l'autre est empêchée, moyennant quoi le module de châssis directionnel (A100) peut être renforcé pour la durée du chargement, afin que la machine de travail à usages multiples soit stable pendant le chargement et le fonctionnement du bras (11).
